# EUROPEAN PATENT APPLICATION

(11) **EP 4 084 415 A1**
(43) Date of publication of application: **02.11.2022**
(21) Application number: 20911202.8
(22) Date of filing: 16.12.2020
(51) Int. Cl.: H04L 12/26, H04W 24/08, H04L 29/06

(54) **DATA MANAGEMENT METHOD AND SYSTEM, ASSOCIATED SUBSYSTEM AND COMPUTER READABLE MEDIUM**

(30) Priority: 30.12.2019 CN 201911398795
(71) Applicant: ZTE Corporation, Shenzhen, Guangdong 518057 (CN)
(72) Inventor: LIAN, Chao, Shenzhen, Guangdong 518057 (CN)
(74) Representative: Swindell & Pearson Limited
(86) International application number: PCT/CN2020/136933
(87) International publication number: WO 2021/135950

(57) **Abstract**

A data management method and system, an associating subsystem, and a computer-readable medium are disclosed. The data management method may include: obtaining user control plane information acquired by a session management function entity (SI); obtaining user data plane information acquired by a user plane function entity (S2); and associating and merging the user control plane information and the user data plane information to generate a user traffic log (S3).

## Description

### CROSS-REFERENCE TO RELATED APPLICATION

This application is filed on the basis of Chinese patent application No. 201911398795.5 filed December 30, 2019, and claims priority of the Chinese patent application, the entire contents of which are incorporated herein by reference.

### TECHNICAL FIELD

The present disclosure relates to the technical field of communications, and particularly to a data management method, an associating subsystem, a computer-readable medium, and a data management system.

### BACKGROUND

IP traceability is of great significance to national security, especially in anti-terrorism and criminal record tracking. At present, there are already mature IP traceability schemes for 2G, 3G, and 4G networks. With the large-scale commercial use of 5G and the advent of the Internet of Everything era, more traffic will be consumed, and the network topology will become more complex, making IP traceability more important. Meanwhile, with the sharp increase in the amount of data and the number of terminal devices in 5G, there arises a need for corresponding big data analysis, which also needs to be met.

However, the deployment of 5G networks is quite different from the deployment of previous generations of networks. In 5G network deployment, the control plane and the user plane are completely separated based on corresponding network elements. In addition, because virtualization is applied to most 5G networks and information acquisition is performed at the hardware level, the networking is complex, difficult, and less feasible. For network elements deployed in combination, signaling at corresponding interfaces cannot be acquired.

### SUMMARY

To solve one of the above technical problems at least to some extent, the present disclosure proposes a data management method, an associating subsystem, a computer-readable medium, and a data management system.

To achieve the above objective, in accordance with an aspect of the present disclosure, an embodiment provides a data management method. The method includes: obtaining user control plane information acquired by a session management function entity; obtaining user data plane information acquired by a user plane function entity; and associating and merging the user control plane information and the user data plane information to generate a user traffic log.

In accordance with another aspect of the present disclosure, an embodiment provides an associating subsystem. The subsystem includes: one or more processors; and a memory, configured for storing one or more programs which, when executed by one or more processors, cause the one or more processors to carry out the data management method described in the above embodiment.

In accordance with yet another aspect of the present disclosure, an embodiment provides a computer-readable medium, storing a computer program which, when executed by a processor, causes the processor to carry out the data management method described in the above embodiments.

In accordance with still another aspect of the present disclosure, an embodiment provides a data management system. The system includes: a session management function entity, a plurality of user plane function entities, a plurality of network address translators in one-to-one correspondence with the plurality of user plane function entities, and a plurality of associating subsystems in one-to-one correspondence with the plurality of user plane function entities, where each of the associating subsystems adopts the associating subsystem described in the above embodiments.

### BRIEF DESCRIPTION OF DRAWINGS

FIG. 1 is a flowchart of a data management method according to an embodiment of the present disclosure;
FIG. 2 is a flowchart of another data management method according to an embodiment of the present disclosure;
FIG. 3 is a flowchart of yet another data management method according to an embodiment of the present disclosure;
FIG. 4 is a flowchart of yet another data management method according to an embodiment of the present disclosure;
FIG. 5 is a flowchart of yet another data management method according to an embodiment of the present disclosure;
FIG. 6 is a flowchart of still another data management method according to an embodiment of the present disclosure;
FIG. 7 is a schematic structural diagram of a data management system according to an embodiment of the present disclosure; and
FIG. 8 is a schematic structural diagram of a system architecture to which the data management method according to the embodiments of the present disclosure is applicable.

### DETAILED DESCRIPTION

In order for those having ordinary skill in the art to better understand the technical schemes of the present disclosure, a data management method, an associating subsystem, a computer-readable medium, and a data management system provided in the present disclosure are described in detail below with reference to the accompanying drawings.

The data management method provided in the present disclosure may be used to generate IP records according to corresponding information of the control plane and the user plane, and can meet corresponding requirements of IP traceability and data analysis.

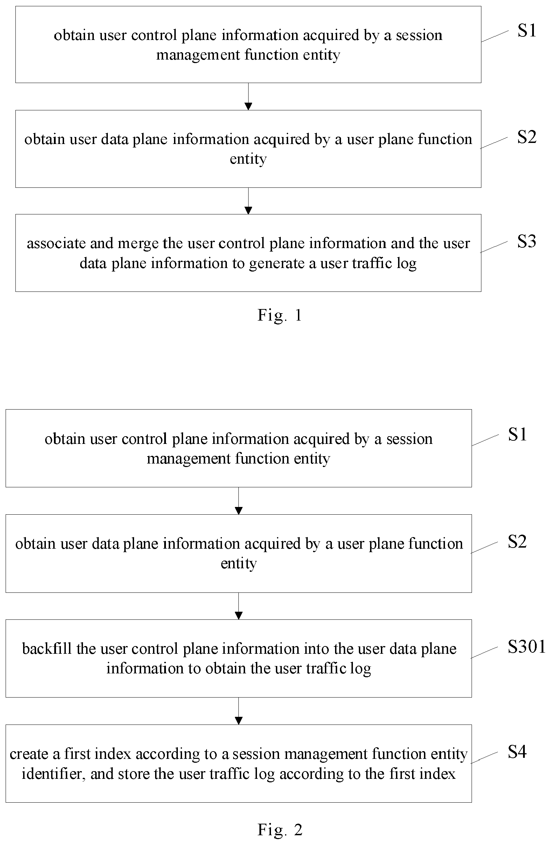

FIG. 1 is a flowchart of a data management method according to an embodiment of the present disclosure. As shown in FIG. 1, the method includes steps S1 to S3.

At S1, user control plane information acquired by a session management function (SMF) entity is obtained.

In some embodiments, the user control plane information includes: protocol data unit session information such as a session management function entity identifier; user identity information such as an International Mobile Subscriber Identity (IMSI), a Mobile Subscriber International ISDN/PSTN number (MSISDN), and an International Mobile Equipment Identity (IMSI); location information; billing information; policy information, and the like.

In some embodiments, the S1 of obtaining user control plane information acquired by the session management function entity includes:
obtaining the user control plane information directly from the session management function entity through a soft acquisition interface configured by the session management function entity; or, obtaining, from another associating subsystem, the user control plane information that is obtained by the another associating subsystem from the session management function entity in advance.

In some embodiments, the session management function entity sends the user control plane information to a closest associating subsystem, and then multiple associating subsystems share the user control plane information, thereby reducing the amount of network information and remote transmissions.

In addition, the use of the soft acquisition interface can avoid the networking complexity caused by virtualization. The soft acquisition interface directly uses data inside the network element, and the information contained in the network element is more comprehensive. Encoding and decoding at the customized soft acquisition interface are simple, and neither requires decryption by a Network Attached Storage (NAS) nor requires a complex protocol stack association. An effective association between the control plane and the user plane can be achieved according to a simple association method.

In some embodiments, the S1 of obtaining the user control plane information acquired by the session management function entity includes:
obtaining the user control plane information acquired by the session management function entity based on a Protocol Data Unit (PDU) session process.

The protocol data unit session process includes: a protocol data unit session creation process, a protocol data unit session modification process, and a protocol data unit session release process. Obtaining the user control plane information from the session management function entity based on the protocol data unit session process means that the user control plane information is obtained in all of the protocol data unit session creation process, the protocol data unit session modification process, and the protocol data unit session release process.

In some embodiments, when the user control plane information carries a creation process identifier, it means that the protocol data unit session creation process is being performed. In this case, a data area is created and corresponding information is stored in the data area. When the user control plane information carries a modification process identifier, it means that the protocol data unit session modification process is being performed. In this case, the data area is updated. When the user control plane information carries a release process identifier, it means that the protocol data unit session release process is being performed. In this case, the data area is released.

At S2, user data plane information acquired by a User Plane Function (UPF) entity is obtained.

In some embodiments, the user data plane information includes: traffic information and Deep Packet Inspection (DPI) information. The deep packet inspection information includes: protocol data unit session information such as a session management function entity identifier; 5-tuple information; time information; an application layer protocol; a Uniform Resource Locator (URL); an application program type, and the like.

In some embodiments, the S2 of obtaining the user data plane information acquired by the user plane function entity includes:
receiving, through a software acquisition interface configured by the user plane function entity, the user data plane information reported by the user plane function entity.

At S3, the user control plane information and the user data plane information are associated and merged to generate a user traffic log.

In some embodiments, the user traffic log is a user IP record.

FIG. 2 is a flowchart of another data management method according to an embodiment of the present disclosure. As shown in FIG. 2, this method is an embodiment based on the method shown in FIG. 1. This method not only includes steps S1 and S2, but also includes steps S301 and S4, where S301 is a specific implementation of S3. Only steps S301 and S4 will be described in detail below.

The S3 of associating and merging the user control plane information and the user data plane information to generate a user traffic log includes a step S301.

At S301, the user control plane information is backfilled into the user data plane information to obtain the user traffic log.

Backfilling the user control plane information into the user data plane information means backfilling protocol data unit session information, user identity information, location information, billing information, policy information and the like into the user data plane information, to obtain the user traffic log.

After S301, the method further includes a step S4.

At S4, a first index is created according to a session management function entity identifier, and the user traffic log is stored according to the first index.

The session management function entity identifier is embodied in the form of "SMF-SEID", "SMF-IP", and the like. Each piece of information transmitted by the session management function entity and the user plane function entity carries the session management function entity identifier.

According to the data management method provided by this embodiment of the present disclosure, the obtaining of control plane related information acquired by the session management function entity and user plane related information acquired by the user plane function entity can be realized without using information at an N4 interface between the session management function entity and the user plane function entity, thereby achieving an association between the control plane information and the user plane information. The generated user traffic log can be used for IP traceability and data analysis. By adopting multiple associating subsystems that share the control plane information, the service complexity and information redundancy are effectively reduced.

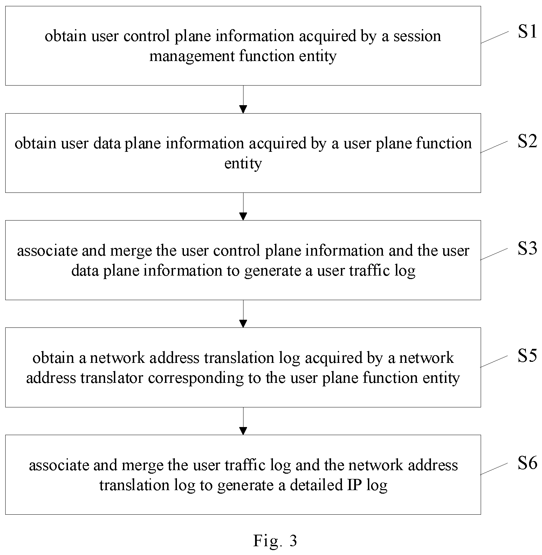

FIG. 3 is a flowchart of yet another data management method according to an embodiment of the present disclosure. As shown in FIG. 3, this method is an optional embodiment based on the method shown in FIG. 1. This method not only includes steps S1 to S3, but also includes steps S5 and S6. Only steps S5 and S6 will be described in detail below.

At S5, a network address translation (NAT) log acquired by a network address translator corresponding to the user plane function entity is obtained.

In some embodiments, the network address translation log includes: a source IP and a source port number of a private network, a source IP and a source port number of a public network, and a related protocol.

It should be noted that the order of execution of steps S1 to S3 and step S5 is not limited in the technical schemes of the present disclosure, i.e., steps S1 to S3 may be executed before, after, or synchronously with step S5, which all fall within the protection scope of the present disclosure.

After S3 and S5, the method further includes a step S6.

At S6, the user traffic log and the network address translation log are associated and merged to generate a detailed IP log.

The detailed IP log is finally stored in a database, and can be used for more comprehensive tracing of user information, the source IP and a destination IP of the private network, the source IP of the public network, the location information, and the like.

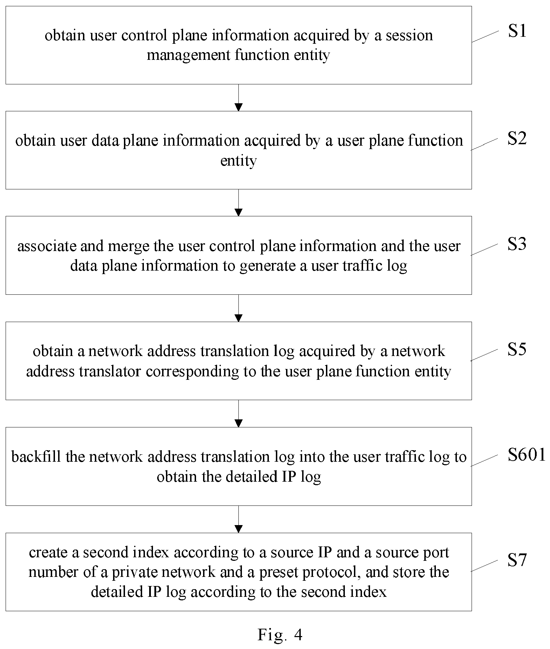

FIG. 4 is a flowchart of yet another data management method according to an embodiment of the present disclosure. As shown in FIG. 4, this method is an optional embodiment based on the method shown in FIG. 3. This method not only includes steps S1 to S5, but also includes steps S601 and S7, where S601 is a specific implementation of S6. Only steps S601 and S7 will be described in detail below.

The S6 of associating and merging the user traffic log and the network address translation log to generate a detailed IP log includes a step S601.

At S601, the network address translation log is backfilled into the user traffic log to obtain the detailed IP log.

Backfilling the network address translation log into the user traffic log means backfilling a source IP and a source port number of a public network and a related protocol into the user traffic log, to obtain the detailed IP log.

After S601, the method further includes a step S7.

At S7, a second index is created according to a source IP and a source port number of a private network and a preset protocol, and the detailed IP log is stored according to the second index.

Generally speaking, the preset protocol includes: Transmission Control Protocol (TCP), User Datagram Protocol (UDP), Internet Protocol (IP), Internet Control Message Protocol (ICMP), and the like.

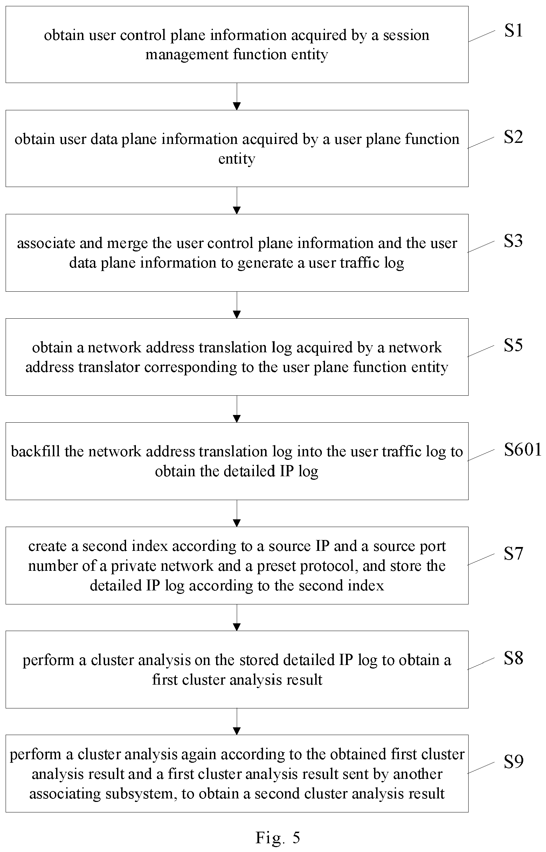

FIG. 5 is a flowchart of yet another data management method according to an embodiment of the present disclosure. As shown in FIG. 5, this method is an optional embodiment based on the method shown in FIG. 4. This method not only includes steps S1 to S7, but also includes steps S8 and S9. Only steps S8 and S9 will be described in detail below.

After S7, the method further includes a step S8.

At S8, a cluster analysis is performed on the stored detailed IP log to obtain a first cluster analysis result.

The first cluster analysis result is only for detailed IP logs stored locally. Although the cluster analysis covers full dimensions, the first cluster analysis result is local.

At S9, a cluster analysis is performed again according to the obtained first cluster analysis result and a first cluster analysis result sent by another associating subsystem, to obtain a second cluster analysis result.

The second cluster analysis result is a global analysis result obtained based on the first cluster analysis result.

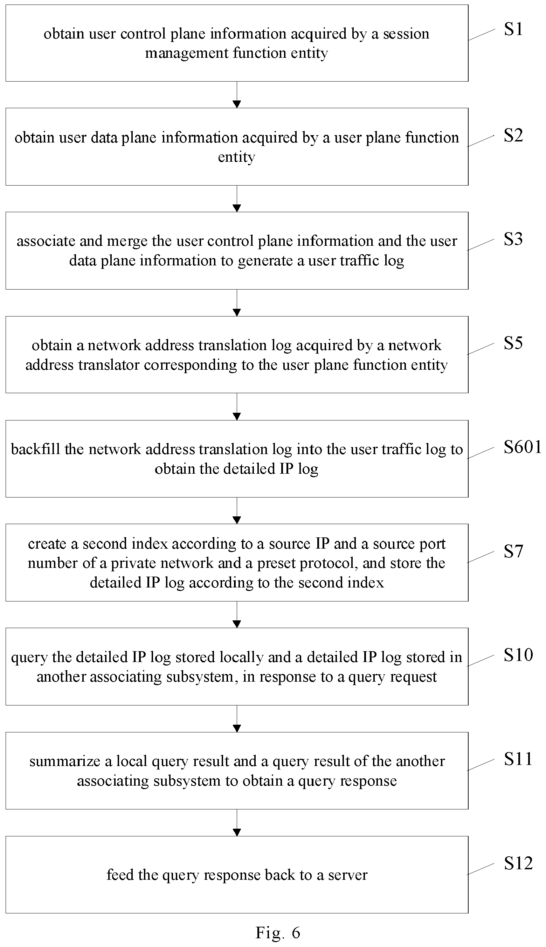

FIG. 6 is a flowchart of still another data management method according to an embodiment of the present disclosure. As shown in FIG. 6, this method is an optional embodiment based on the method shown in FIG. 4. This method not only includes step S1 to S7, but also includes steps S10 to S12. Only steps S10 to S12 will be described in detail below.

After S7, the method further includes steps S10 to S12.

At S10, the detailed IP log stored locally and a detailed IP log stored in another associating subsystem are queried in response to a query request.

At S11, a local query result and a query result of the another associating subsystem are summarized to obtain a query response.

At S12, the query response is fed back to a server.

This embodiment of the present disclosure provides a data management method, which can implement a corresponding big data analysis according to detailed IP logs, and respond to a corresponding query request.

It should be noted that, different steps in the foregoing embodiments may be combined with each other to form a new embodiment, and a technical scheme corresponding to the new embodiment should also fall within the protection scope of the present disclosure.

An embodiment of the present disclosure also provides a data management system. The system includes: a session management function entity, a plurality of user plane function entities, a plurality of network address translators in one-to-one correspondence with the plurality of user plane function entities, and a plurality of associating subsystems in one-to-one correspondence with the plurality of user plane function entities, where each of the associating subsystems adopts the associating subsystem described in the above embodiments.

The steps and processes of the data management method and the data management system in the present disclosure will be described in detail below with reference to practical applications.

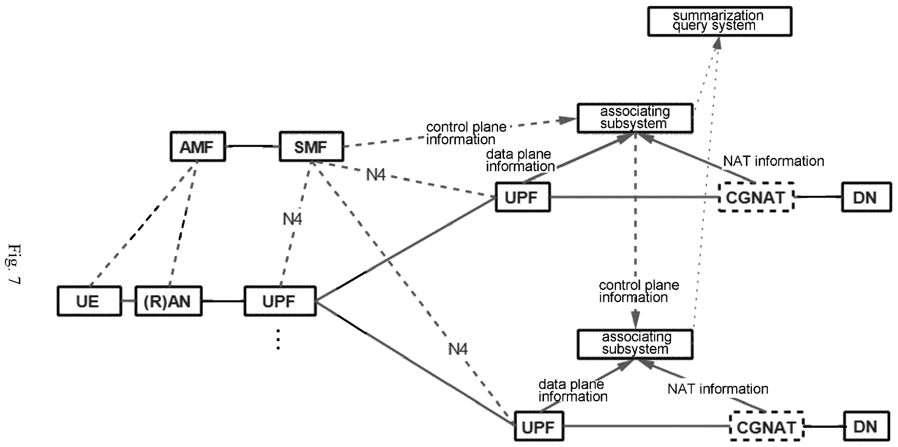

FIG. 7 is a schematic structural diagram of a data management system according to an embodiment of the present disclosure. As shown in FIG. 7, taking an existing scenario including one central equipment room and three auxiliary equipment rooms as an example, control-plane network elements such as a session management function entity is deployed in the central equipment room, and user-plane network elements such as a user plane function entity and a network address translator are deployed in each of the three auxiliary equipment rooms. Also, an associating subsystem is deployed in each of the three auxiliary equipment rooms. The user plane function entities are deployed in a one-to-one correspondence with the network address translators, and the user plane function entities are deployed in a one-to-one correspondence with the associating subsystems.

The session management function entity sends user control plane information to an associating subsystem (to be specific, a data acquisition module of the associating subsystem) in the first equipment room, and then this associating subsystem shares the user control plane information with the associating subsystems in the second equipment room and the third equipment room. During this period, this associating subsystem (data acquisition module) obtains user data plane information reported by the corresponding user plane function entity and a network address translation log reported by the corresponding network address translator. This associating subsystem associates and merges the user control plane information and the user data plane information to generate a user traffic log, and associates and merges the user traffic log and the network address translation log to generate a detailed IP log.

Afterward, this associating subsystem stores the detailed IP log (to be specific, in a raw data storage module of the associating subsystem), and does not forward the detailed IP log. The local storage of the detailed IP log can avoid bandwidth consumption. After storing the detailed IP log, this associating subsystem (to be specific, a primary cluster analysis module of the associating subsystem) may perform a primary big-data cluster analysis to generate a first cluster analysis result. Also, in order to avoid bandwidth consumption, the analysis is only for the local detailed IP log. Afterward, this associating subsystem (to be specific, a secondary cluster analysis module of the associating subsystem) receives first cluster analysis results reported by other equipment rooms, and performs a secondary big-data cluster analysis to generate a second cluster analysis result. Because the first cluster analysis results are aggregated data having a small data volume, the bandwidth consumption is low.

The first cluster analysis results and the second cluster analysis result may be applied to operation and maintenance work such as network element bandwidth statistics, packet loss statistics, connection number statistics, user number statistics, and access type statistics.

The associating subsystem of the second equipment room (to be specific, a tracing query module of the associating subsystem) may respond to a corresponding query request, for example, by the following process: distributing the query request to all the associating subsystems (raw data storage modules) to query detailed IP logs stored in the associating subsystem of the second equipment room and the other associating subsystems, summarizing query results to obtain a query response, and feeding the query response back to a Web server. The data transmission in the query process is carried out only between the auxiliary equipment rooms, which does not consume the bandwidth between the auxiliary equipment rooms in the central equipment room, and thus avoids affecting the transmission of control plane signaling. In addition, the query response received by the Web server is a final data set, so the data volume is minimized.

It should be noted that the deployment of the secondary cluster analysis module and the tracing query module in different equipment rooms, i.e., the execution of the process corresponding to steps S8 and S9 and the process corresponding to steps S10 to S12 by two different associating subsystems is merely an optional implementation in the embodiments of the present disclosure.

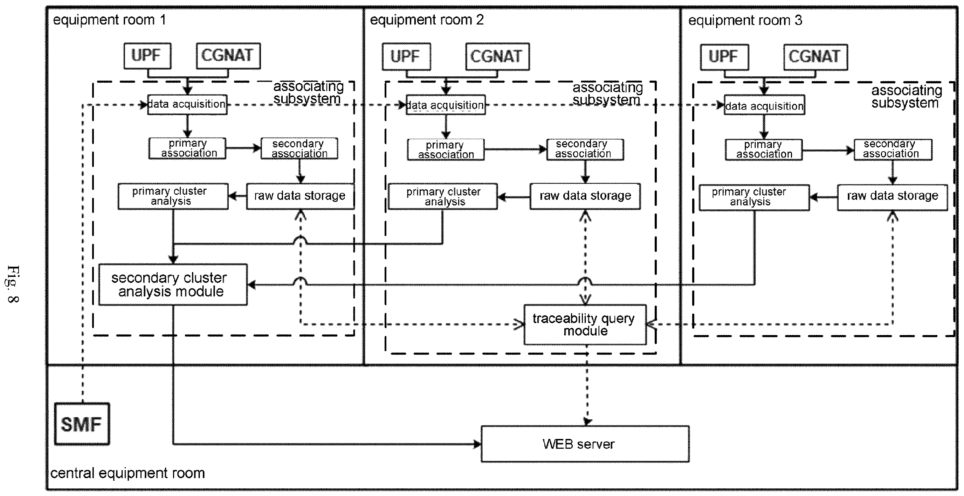

FIG. 8 is a schematic structural diagram of a system architecture to which the data management method according to the embodiments of the present disclosure is applicable. As shown in FIG. 8, the system architecture is deployed based on an existing 5G architecture. In addition, a tracing query request may also be responded to through a corresponding summarization query system.

An embodiment of the present disclosure also provides an associating subsystem. The subsystem includes: one or more processors; and a memory, configured for storing one or more programs which, when executed by one or more processors, cause the one or more processors to carry out any of the data management methods described in the above embodiments.

An embodiment of the present disclosure also provides a computer-readable medium, storing a computer program which, when executed by a processor, causes the processor to carry out any of the data management methods described in the above embodiments.

The embodiments of the present disclosure have the following beneficial effects.

The embodiments of the present disclosure provide a data management method, an associating subsystem, a computer-readable medium, and a data management system, which can respectively obtain information corresponding to the control plane and information corresponding to the user plane and generate a traffic log according to the information, thereby meeting the needs of IP traceability and big data analysis while reducing the complexity of deployment and ensuring the network performance.

Those having ordinary skill in the art can understand that all or some of the steps in the methods disclosed above and the functional modules/units in the apparatus may be implemented as software, firmware, hardware, and appropriate combinations thereof. In a hardware implementation, the division of the functional modules/units mentioned in the above description does not necessarily correspond to the division of physical components. For example, one physical component may have multiple functions, or one function or step may be jointly executed by several physical components. Some or all physical components may be implemented as software executed by a processor, such as a central processing unit, a digital signal processor, or a microprocessor, or as hardware, or as an integrated circuit, such as an application-specific integrated circuit. Such software may be distributed on a computer-readable medium, which may include a computer storage medium (or non-transitory medium) and a communication medium (or transitory medium). As is known to those having ordinary skill in the art, the term "computer storage medium" includes volatile and nonvolatile, removable and non-removable media implemented in any method or technology for storage of information (such as computer readable instructions, data structures, program modules, or other data). The computer storage medium includes, but not limited to, a random access memory (RAM), a read-only memory (ROM), an electrically erasable programmable read-only memory (EEPROM), a flash memory or other memory technology, a compact disc read-only memory (CD-ROM), a digital versatile disc (DVD) or other optical storage, a cassette, a magnetic tape, a magnetic disk storage or other magnetic storage device, or any other medium which can be used to store the desired information and which can be accessed by a computer. In addition, as is known to those having ordinary skill in the art, the communication medium typically includes computer-readable instructions, data structures, program modules, or other data in a modulated data signal such as a carrier or other transport mechanism, and can include any information delivery medium.

The embodiments have been disclosed herein, and although specific terms are employed, they are used and should only be construed in a general descriptive sense and not for purposes of limitation. In some examples, it will be apparent to those having ordinary skill the art that unless expressly stated otherwise, a feature, characteristic, and/or element described in conjunction with a particular embodiment may be used alone or in combination with a feature, characteristic, and/or element described in conjunction with another embodiment. Therefore, it will be understood by those having ordinary skill in the art that various changes in form and details may be made without departing from the scope of the present disclosure as set forth in the appended claims.

## Claims

1. A data management method, comprising:
obtaining user control plane information acquired by a session management function entity;
obtaining user data plane information acquired by a user plane function entity; and
associating and merging the user control plane information and the user data plane information to generate a user traffic log.

2. The data management method of claim 1, wherein
associating and merging the user control plane information and the user data plane information to generate a user traffic log comprises:
backfilling the user control plane information into the user data plane information to obtain the user traffic log;
and
after associating and merging the user control plane information and the user data plane information to generate a user traffic log, the method further comprises:
creating a first index according to a session management function entity identifier, and storing the user traffic log according to the first index.

3. The data transmission method of claim 1, wherein obtaining user control plane information acquired by a session management function entity comprises:
obtaining the user control plane information directly from the session management function entity through a soft acquisition interface configured by the session management function entity; or
obtaining, from another associating subsystem, the user control plane information which is obtained by the another associating subsystem from the session management function entity in advance.

4. The data transmission method of claim 1, wherein obtaining user control plane information acquired by a session management function entity comprises:
obtaining the user control plane information based on a protocol data unit session process.

5. The data management method of claim 1, wherein obtaining user data plane information acquired by a user plane function entity comprises:
receiving, through a software acquisition interface configured by the user plane function entity, the user data plane information reported by the user plane function entity.

6. The data management method of any one of claims 1 to 5, further comprising:
obtaining a network address translation log acquired by a network address translator corresponding to the user plane function entity; and
after associating and merging the user control plane information and the user data plane information to generate a user traffic log, the method further comprises:
associating and merging the user traffic log and the network address translation log to generate a detailed IP log.

7. The data management method of claim 6, wherein associating and merging the user traffic log and the network address translation log to generate a detailed IP log comprises:
backfilling the network address translation log into the user traffic log to obtain the detailed IP log; and
after associating and merging the user traffic log and the network address translation log to generate a detailed IP log, the method further comprises:
creating a second index according to a source IP and a source port number of a private network and a preset protocol, and storing the detailed IP log according to the second index.

8. The data management method of claim 7, wherein after storing the detailed IP log according to the second index, the method further comprises:
performing a cluster analysis on the stored detailed IP log to obtain a first cluster analysis result.

9. The data management method of claim 8, wherein after performing a cluster analysis on the stored detailed IP log, the method further comprises:
performing a cluster analysis again according to the obtained first cluster analysis result and a first cluster analysis result sent by another associating subsystem, to obtain a second cluster analysis result.

10. The data management method of claim 7, wherein after storing the detailed IP log according to the second index, the method further comprises:
querying the detailed IP log stored locally and a detailed IP log stored in another associating subsystem, in response to a query request;
summarizing a local query result and a query result of the another associating subsystem to obtain a query response; and
feeding the query response back to a server.

11. An associating subsystem, comprising:
one or more processors; and
a memory, configured for storing one or more programs,
wherein the one or more programs, when executed by the one or more processors, cause the one or more processors to carry out the data management method of any one of claims 1 to 10.

12. A computer-readable medium, storing a computer program which, when executed by a processor, causes the processor to carry out the data management method of any one of claims 1 to 10.

13. A data management system, comprising:
a session management function entity,
a plurality of user plane function entities,
a plurality of network address translators in one-to-one correspondence with the plurality of user plane function entities, and
a plurality of associating subsystems in one-to-one correspondence with the plurality of user plane function entities,
wherein each of the associating subsystems adopts the associating subsystem of claim 11.
